# EUROPEAN PATENT SPECIFICATION

(11) **EP 2 829 726 B1**
(45) Date of publication and mention of the grant of the patent: **01.06.2016**
(21) Application number: 12881143.7
(22) Date of filing: 14.12.2012
(51) Int. Cl.: F03D 80/00, F16N 31/00, F03D 7/02

(54) **WIND TURBINE GENERATOR AND INSTALLATION METHOD OF THE SAME**
WINDTURBINENGENERATOR UND INSTALLATIONSVERFAHREN DAFÜR
GÉNÉRATEUR D'ÉNERGIE ÉOLIENNE ET SON PROCÉDÉ D'INSTALLATION

(43) Date of publication of application: 28.01.2015
(73) Proprietor: Mitsubishi Heavy Industries, Ltd., Tokyo 108-8215 (JP); MHI Vestas Offshore Wind A/S, 8200 Aarhus N (DK)
(72) Inventor: FUJIOKA, Yoshihiro, Yokohama-shi Kanagawa 231-8715 (JP); KAMIBAYASHI, Masakazu, Tokyo 108-8215 (JP)
(74) Representative: Intès, Didier Gérard André
(86) International application number: PCT/JP2012/082497
(87) International publication number: WO 2014/091617

(56) References cited:
- WO-A1-2011/064002
- WO-A2-2009/149699
- US-A1- 2010 109 333
- US-A1- 2010 124 507
- US-A1- 2011 138 595

## Description

### [Technical Field]

The present disclosure relates to a wind turbine generator which is provided with a nacelle supported free of turning relative to a tower, and an installation method of the wind turbine generator.

### BACKGROUND ART

In recent years, wind turbine generators are becoming popular from the perspective of preserving the global environment. In a wind turbine generator, rotational energy of a blade rotated upon receiving wind is inputted to a generator through a hub and a main shaft, hence generating electric power.

Normally, the blade is mounted to the nacelle rotatably via the hub and thus the nacelle is supported by the tower to be free of turning (yaw-turning) so as to adjust a rotation face of the blade according to the wind direction. For instance, described in Patent Literature 1 and Patent Literature 2 is a structure for turning the nacelle via a yaw bearing provided on the top of the tower.

Inside the nacelle, a yaw motor for rotating the yaw bearing, a drive train such as a step-up gear and a hydraulic transmission, or a variety of devices such as a main bearing for supporting the main shaft are placed. In some of these devices, lubricant such as oil and grease is used in parts such as a gear provided between the yaw motor and the yaw bearing, a bearing mounted in the drive train, and the main bearing for supporting the main shaft. Moreover, there are some devices, such as the hydraulic transmission, in which oil is used as operating oil or as coolant. If oil leaks from these devices that use oil (including grease), there is possibility that leak oil leaks further to an exterior of the wind turbine generator.

Therefore, to prevent the oil leak outside the wind turbine generator, Patent Literature 3 proposes a structure of the wind turbine generator provided with a lubricant oil collector which is connectable to the nacelle. This lubricant oil collector includes a groove part and is configured so that the groove part is pressed against the tower via a flexible side part.

Document US 2011/0138595 presents a maintenance method for a wind turbine generator.

Document US 2010/0109333 presents a protection arrangement for a wind turbine.

### [Citation List]

### [Patent Literature]

[PTL 1]
   EP 2196668 A
[PTL 2]
   EP 2317137 A
[PTL 3]
   WO 2011/064002

### SUMMARY

### [Technical Problem]

As described above, in the wind turbine generator described in Patent Literature 3, the lubricant oil collector is provided to prevent the leak oil inside the nacelle from leaking further to the outside of the nacelle. However, the yawing of the nacelle relative to the tower might cause the leak oil to leak from the vicinity of the yaw bearing to the outside of the wind turbine generator. In this aspect, the wind turbine generator of Patent Literature 3 is configured to prevent the leak oil from leaking further to the outside by means of the flexible side part provided in the groove part of the lubricant oil collector during the yaw turning. However, with the pressing force from the side part alone, if foreign objects enter a sliding part during the yaw turning, a gap is created, which makes it difficult to prevent the leak oil from leaking further.

An object of at least one embodiment of the present invention is to provide a wind turbine generator which makes it possible to reliably prevent the leak oil having leaked inside the nacelle from leaking to the outside of the nacelle, and an installation method of the wind turbine generator.

### [Solution to Problem]

A wind turbine generator according to at least one embodiment of the present invention comprises:
a tower;
a nacelle having a bottom formed with an opening along an outer circumferential surface of an upper end of the tower and with a depression around the opening;
a yaw bearing for supporting the nacelle rotatably to the tower;
a brake disc provided between a bottom end surface of the yaw bearing and a top end surface of the tower; and
a first seal member attached to a bottom part of the yaw bearing or to the brake disc, the first seal member being configured to contact an edge part of the bottom of the nacelle on an opening side.

According to the above wind turbine generator, the bottom is arranged along the outer circumference of the upper end of the tower and the depression is formed in the bottom of the nacelle. Thus, leak oil leaking from a variety of devices inside the nacelle can be collected in the depression. This prevents leaking of the leak oil to the outside of the wind turbine generator. Further, provided is the first seal member which is attached to the bottom part of the yaw bearing or to the brake disc and configured to contact the edge part of the bottom of the nacelle on the opening side. Thus, even when the nacelle turns with respect to the tower, by the first seal member, it is possible to prevent leaking of the leak oil from between the nacelle and the tower. In the present description, the leak oil includes grease used as lubricant as well as lubricant oil, operating oil, or oil used as cooling agent or the like.

Moreover, the first seal member is attached to the brake disc or the bottom part of the yaw bearing. Thus, installation of the first seal member can be completed at a plant where the nacelle is manufactured. More specifically, normally in the case where the nacelle unit including the nacelle base plate, the brake disc and the nacelle cover is manufactured at the plant where the nacelle is manufactured, by attaching the first seal member to the brake disc or the bottom part of the yaw bearing, the fist seal member can be included in the nacelle unit. As a result, the installation of the wind turbine generator on site simply includes mounting of the nacelle unit to the upper end of the tower. This eliminates the work of attaching the seal member at a high place, i.e. an upper end of the tower. As a result, the workability is improved. Further, it may be feasible to provide beforehand the bottom of the nacelle with the depression for collecting the oil and the seal member are provided at the upper end. This, however, has poor positional accuracy of the seal member and the bottom of the nacelle. In contrast, in the above-described structure in which the seal member and the depression are attached to the nacelle side, it is possible to achieve high positional accuracy of the seal member and the bottom of the nacelle and to reliably prevent leaking of the leak oil to the outside.

In some embodiments, the bottom of the nacelle is configured so that the edge part of the bottom of the nacelle is disposed above a side face on the opening side which forms the depression, and the first seal member is arranged to contact the edge part on the opening side from above.

By arranging the first seal member to contact the edge part of the bottom of the nacelle on the opening side from above, the leak oil generated inside the nacelle is reliably led to the depression of the bottom of the nacelle.

In some embodiments, in at least a part of an area where the edge part on the opening side contacts the first seal member, the edge part on the opening side has an inclined surface arranged to incline downward toward a radially outward direction of the tower.

As the edge part on the opening side has the inclined surface arranged to incline downward toward the radially outward direction of the tower, the leak oil generated inside the nacelle is reliably led along the inclined surface to the depression of the bottom of the nacelle.

In some embodiments, the first seal member includes at least one projection which is provided on a surface of the first seal member that faces the edge part on the opening side, the at least one projection being provided with antiwear coating.

The first seal member attached to the bottom of the yaw bearing or the brake disc, slides with respect to the edge part of the bottom of the nacelle on the opening side when the nacelle turns. Therefore, by providing the projection on the first seal member, it is possible to enhance the pressing force of the first seal member against the edge part of the bottom of the nacelle on the opening side. This prevents leaking of the leak oil more reliably. Further, as the projection is provided with antiwear coating, it is possible to form the structure that is not prone to wear even when the first seal member and the edge part of the bottom of the nacelle slide against each other.

In some embodiments, the bottom of the nacelle includes at least one rib provided in the depression.

In this manner, by providing the rib in the depression of the bottom of the nacelle, strength of the bottom of the nacelle can be improved, hence attaining the structure that can withstand weight increase due to the leak oil collected in the depression.

In some embodiments, the wind turbine generator further comprises at least one bolt for mounting the first seal member to the bottom part of the yaw bearing or the brake disc and at least one second seal member which covers a head of the at least one bolt.

By mounting the first seal member to the bottom part of the yaw bearing or the brake disc using the at least one bolt, and covering the head of the bolt with the second seal member, it is possible to prevent leaking of the leak oil from the bolt hole to the outside of the wind turbine generator.

In one embodiment, a third seal member is also provided for seal between the brake disk and the first seal member attached to the brake disk, and the third seal member is provided over an entire circumference of the brake disk.

In the case where the first seal member is attached to the brake disc or the bottom part of the yaw bearing with at lest one bolt, the pressing force of the first seal member between adjacent two of the bolts deteriorates. Thus, the third seal member is provided for seal between the brake disc and the first seal member over the entire circumference of the brake disc. This prevents leaking of the leak oil more reliably.

In some embodiments, the first seal member is formed with a plurality of slits on an inner circumferential side to absorb a difference in circumferential length between the inner circumferential side and an outer circumferential side, the first seal member being formed into a taper shape inclining from the inner circumferential side toward the outer circumferential side.

As a result, the first seal member can be produced easily and it is possible to lower cost of the parts.

In some embodiments, the first seal member is attached to the brake disc provided between an outer ring of the yaw bearing and the top end surface of the tower.

As a result, it is possible to achieve simplified work for attaching the first seal member.

In one embodiment, the first seal member is attached to an area of a top surface of the brake disk which is not covered by the outer ring, and the wind turbine generator further comprises an annular retaining plate for pressing the first seal member attached to the area toward the brake disk from above.

As a result, it is possible to achieve weight reduction of the brake disc.

In some embodiments, the wind turbine generator further comprises a yaw drive system comprising a pinion gear meshing with external teeth provided on an outer ring of the yaw bearing, and a drive unit for driving the pinion gear, and the first seal member is attached to an outer circumferential surface of the outer ring in an area of the outer circumferential surface located lower than the external teeth.

In some embodiments, the nacelle comprises a nacelle base plate attached to the yaw bearing, a nacelle frame attached to the nacelle base plate, and a nacelle cover attached to the nacelle frame, and the nacelle cover comprises a nacelle cover body for forming an interior space of the nacelle and the bottom attached to a bottom surface of the nacelle cover body.

In one embodiment, the first seal member comprises an elastic member provided to cover the edge part on the opening side.

By providing the first seal member to cover the edge part of the bottom of the nacelle on the opening side, the leak oil generated in the nacelle or in the periphery can be surely led to the depression of the bottom of the nacelle. Further, as the first seal member includes the elastic member, it is possible to surely seal the gap between the nacelle and the tower even when the nacelle turns relative to the tower.

According to at least one embodiment of the present invention, an installation method of a wind turbine generator which comprises: a tower; a nacelle having a bottom formed with an opening along an outer circumferential surface of an upper end of the tower and with a depression around the opening; a yaw bearing for supporting the nacelle rotatably to the tower; a brake disc provided between a bottom end surface of the yaw bearing and a top end surface of the tower; and a first seal member attached to a bottom part of the yaw bearing or to the brake disc, the first seal member being configured to contact an edge part of the bottom of the nacelle on an opening side, comprises:
a nacelle unit formation step of forming a nacelle unit including the nacelle, the yaw bearing, the brake disk and the first seal member;
a tower installation step of installing the tower; and
a nacelle unit installation step of installing the nacelle unit on the tower after the tower installation step.

According to the above installation method of the wind turbine generator, the bottom is arranged along the outer circumference of the upper end of the tower. Thus, leak oil leaking for devices provided in the wind turbine generator, such as a lubricant oil unit is collected in the depression of the bottom of the nacelle. This prevents the leak oil from leaking to the outside of the wind turbine generator. Further, provided is the first seal member which is attached to the bottom part of the yaw bearing or to the brake disc and configured to contact the edge part of the bottom of the nacelle on the opening side. Thus, even when the nacelle turns with respect to the tower, by the first seal member, it is possible to prevent leaking of the leak oil from between the nacelle and the tower.

Moreover, the first seal member can be attached to the brake disc or the bottom part of the yaw bearing. Thus, installation of the first seal member can be completed at a plant where the nacelle is manufactured.

In one embodiment, the nacelle unit formation step comprises the substeps of:
making an annular object by deforming a rectangular elastic member having a plurality of slits on one edge along a longitudinal direction such that both ends of the elastic member are abutted to each other, and said one edge is arranged on an inner circumferential side of the annular object whereas an edge opposing said one edge is arranged on an outer circumferential side of the annular object; and
attaching the annular object to a top surface of the brake disc to form the seal member.

As the rectangular elastic member can be used, production cost of the first seal member can be lowered. Moreover, the slits are in the rectangular member and the rectangular member is deformed the rectangular member into an annular shape. This creates an inclined surface from the outer circumferential side toward the inner circumferential side. This makes it easier to lead the leak oil to the depression of the bottom of the nacelle.

### [Advantageous Effects]

According to at least one embodiment of the present invention, the bottom is arranged along the outer circumference of the upper end of the tower and the depression is formed in the bottom of the nacelle. Thus, leak oil leaking from a variety of devices inside the nacelle can be collected in the depression. This prevents leaking of the leak oil to the outside of the wind turbine generator. Further, the first seal member is attached to the bottom part of the yaw bearing or to the brake disc and configured to contact the edge part of the bottom of the nacelle on the opening side. Thus, even when the nacelle turns with respect to the tower, by the first seal member, it is possible to prevent leaking of the leak oil from between the nacelle and the tower.

Moreover, the first seal member is attached to the brake disc or the bottom part of the yaw bearing. Thus, installation of the first seal member can be completed at the plant where the nacelle is manufactured.

### BRIEF DESCRIPTION OF DRAWINGS

[FIG.1] A schematic illustration of an overall structure of a wind turbine generator according to one embodiment of the present invention.
[FIG.2] A cross-sectional view of a part of connection between a nacelle and a tower according one embodiment of the present invention.
[FIG.3] An enlarged cross-sectional view of a yaw bearing and its peripheral structure of FIG.2.
[FIG.4] An enlarged cross-sectional view of a seal member and its peripheral structure of FIG.3.
[FIG.5] A bottom view of a brake disc.
[FIG.6] A cross-sectional view of the part of connection between the nacelle and the tower according to another embodiment of the present invention.
[FIG.7] An enlarged cross-sectional view of the yaw bearing and its peripheral structure of FIG.6.
[FIG.8] An oblique view of the nacelle according to one embodiment of the present invention.
[FIG.9] An oblique view of a bottom of the nacelle according to one embodiment of the present invention.

### DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

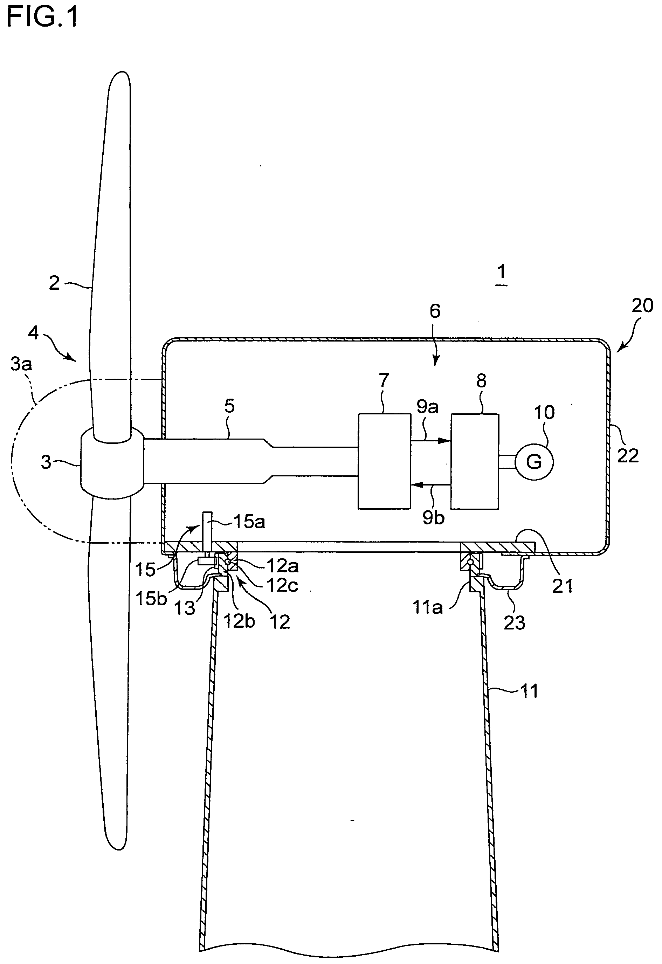

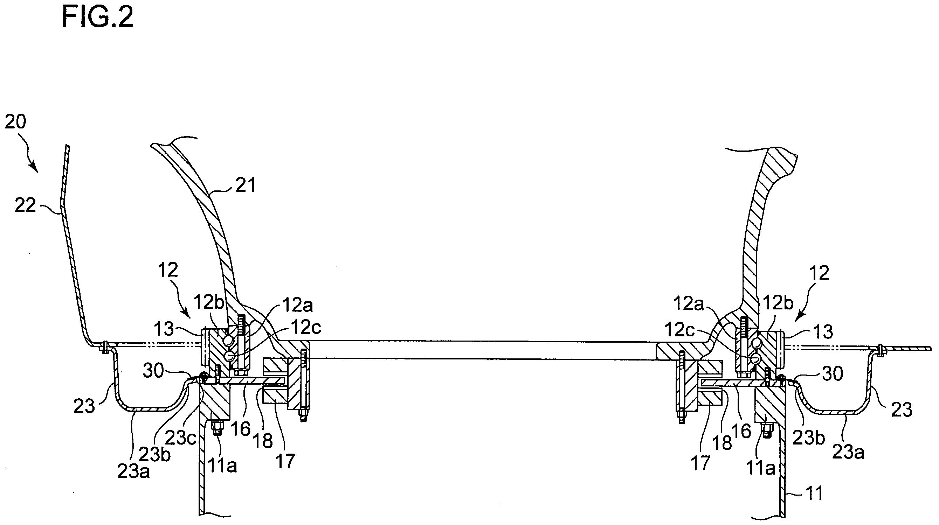

FIG.1 is a schematic illustration of an overall structure of a wind turbine generator according to one embodiment of the present invention. FIG.2 is a cross-sectional view of a part of connection between a nacelle and a tower according one embodiment of the present invention.

As illustrated in FIG.1, the wind turbine generator 1 is provided with a rotor 4 formed by at least one blade 2 and a hub 3, a main shaft 5 coupled to the hub 3, a generator 10 for producing electric power, a drive train 6 for transmitting rotational energy of the main shaft 5 to the generator 10.

Further, a variety of devices including the main shaft 5 may be contained in a nacelle 20 placed on an upper end 11a of a tower 11 which is installed on the water or the ground and covered by a nacelle cover of the nacelle. Herein, the nacelle cover is formed by a nacelle cover body 22 for covering the devices housed in the nacelle 20 and a bottom 23 arranged around the tower 11. Further, the hub 3 may be covered by a hub cover 3a.

In some embodiments, the drive train 6 is configured to include a hydraulic pump 7 attached to the main shaft 5, and a hydraulic motor 8 which is connected to the hydraulic pump 7 via a high pressure oil line 9a and a low pressure oil line 9b. The hydraulic pump 7 is configured to be driven by the main shaft 5 to pressurize the operating oil, thereby producing high pressure operating oil (pressurized oil). An outlet of the hydraulic pump 7 is connected to an inlet of the hydraulic motor 8 via the high pressure oil line 9a. Thus, the pressurized oil produced by the hydraulic pump 7 is supplied to the hydraulic motor 8 via the high pressure oil line 9a and then the hydraulic motor 8 is driven by this pressurized oil. The low pressure operating oil having performed work in the hydraulic motor 8 is returned to the hydraulic pump 7 via the low pressure oil line 9b provided between the outlet of the hydraulic motor 8 and the inlet of the hydraulic pump 7. Further, an output shaft of the hydraulic motor 8 is connected to a rotation shaft of the generator 10 so that rotation of the hydraulic motor 8 is inputted to the generator 10. In the drive train 6, the number of the hydraulic pump 7, the hydraulic motor 8 and the generator 10 is not particularly limited as long as there is at least one of each.

Further, FIG.1 illustrates a hydraulic transmission as the drive train 6. However, the drive train 6 is not limited to this and a step-up gear or a direct drive transmission in which the main shaft 5 is directly connected to the generator 10 may be used as the drive train 6.

In some embodiments, the drive train 6 and the generator 10 are placed in the nacelle 20.

In one embodiment, the nacelle 20 includes a nacelle base plate 21 provided with a bearing (not shown) for supporting the main shaft 5, the nacelle cover body for covering the devices placed on the nacelle base plate 21, and the bottom 23 provided along the outer circumference of the tower upper end 11a.

More specifically, the nacelle base plate 21 is, for example, made of cast steel such as spherical graphite cast iron and high strength cast iron. The nacelle cover body 22 is attached to a frame (not shown) which is assembled and attached to the nacelle base plate 21 so as to cover the devices (e.g. the drive train 6, the generator, etc.) placed on the nacelle base plate 21. The structure of the bottom 23 is described later in details.

The nacelle 20 is configured to turn with respect to the tower 11.

More specifically, the wind turbine generator 1 includes, as a yaw turning mechanism, a yaw bearing 12 for supporting the nacelle 20 so that it can rotate (yaw-turning) with respect to the tower 11, and a yaw drive system 15 for driving the yaw bearing 12.

As illustrated in FIG.1 and FIG.2, in one embodiment, the yaw bearing 12 includes an inner ring 12a fixed to the nacelle base plate 21, an outer ring 12b fixed to the tower upper end 11a, a ball bearing 12c placed between the inner ring 12a and the outer ring 12b. On the outer circumferential side of the outer ring 12b, external teeth 13 are provided. Meanwhile, the yaw drive system 15 includes a pinion gear 15b whose teeth mesh with the external teeth 13, and a drive unit (a yaw motor) 15a for driving the pinion gear 15b. Further, fixing of the inner ring 12a to the nacelle base plate 21, or fixing of the outer ring 12b to the tower upper end 11a may be achieved by bolt fastening.

In the yaw turning mechanism having the above structure, the pinion gear 15b supported on the nacelle 20 side is arranged to mesh with the external teeth 13 supported on the tower 11 side. Thus, when the pinion gear 15b is rotated by the drive unit 15a, the pinion gear 15b rotates a center axis of the tower 11 with the nacelle 20 and the inner ring 12a. In this process, the outer ring 12b supported on the tower 11 side and the inner ring supported on the nacelle 20 side rotate relatively via the ball bearing 12c. In this manner, the yaw drive system 15 is driven so that the nacelle 20 is turned relative to the tower 11 around the center axis of the tower 11.

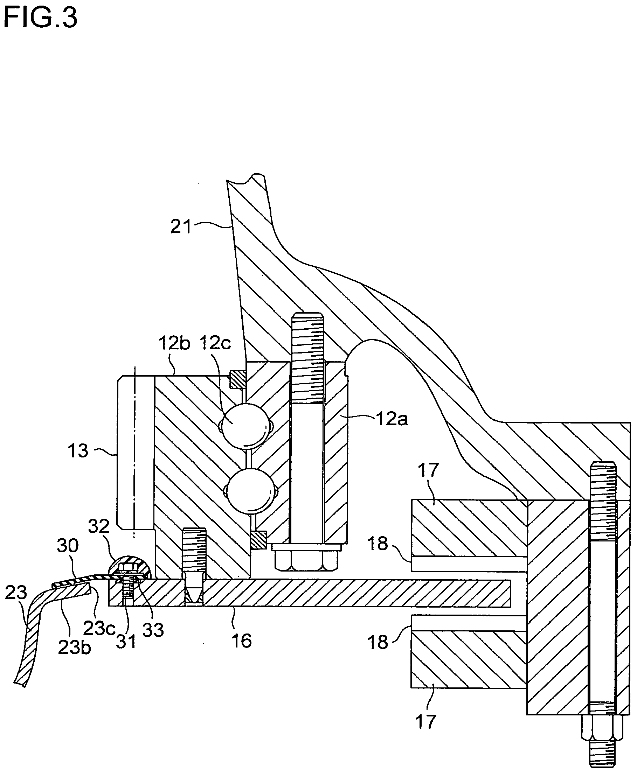

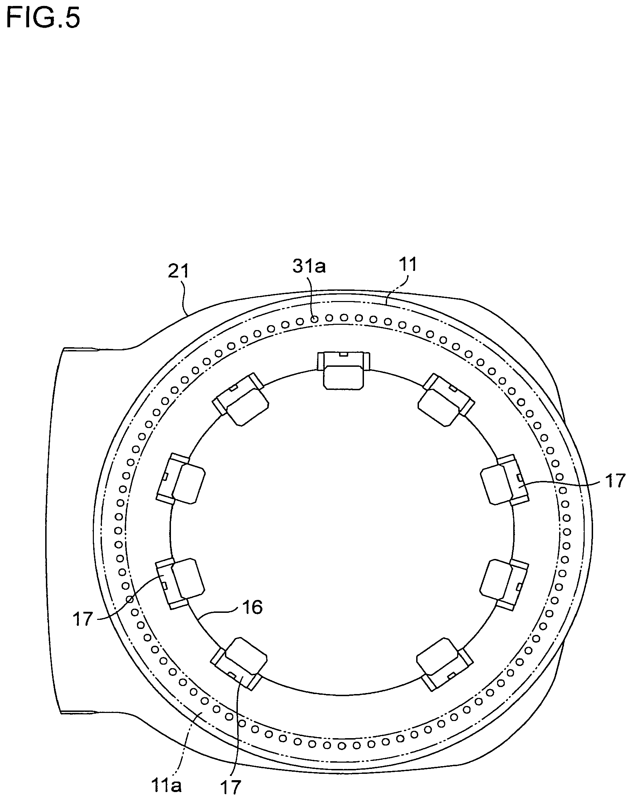

Further, the wind turbine generator 1 includes a braking mechanism for applying a brake force to the nacelle 20 which is turned by the yaw turning mechanism. As illustrated in FIG.2 and FIG.3, in one embodiment, the braking mechanism includes a brake disc 16 fixed to the tower upper end 11a, and both a brake caliper 17 and a brake pad 18 which are fixed to the nacelle base plate 21. The brake disc 16 is provided between the bottom end surface of the yaw bearing 12 and the top end surface of the tower 11. Further, the brake disc 16 may be formed into an annular shape extending from the tower upper end 11a toward an inner circumferential side of the tower, as illustrated in FIG.5. Further, FIG.5 is a bottom view of the brake disc 16. The brake caliper 17 is configured to stop relative rotation of the brake disc 16 and the brake caliper 17 by pressing the brake pad 18 to both sides of the brake disc 16 and generating a frictional force. As a result, the braking force is applied to the nacelle 20 to which the brake caliper 17 is attached, by the brake disc 16 attached to the tower 11. Further, a plurality of the brake calipers 17 and the brake pads 18 may be provided in the circumferential direction of the brake disc 16 at predetermined distance.

The wind turbine generator 1 having the above structure further includes the following structure for the purpose of preventing leaking of leak oil outside the wind turbine generator 1. In the present description, the leak oil includes grease used as lubricant as well as lubricant oil, operating oil, or oil used as cooling agent or the like.

As illustrated in FIG.2, in one embodiment, a depression 23a is provided in the bottom 23 of the nacelle 20 to collect the leak oil generated inside the wind turbine generator 1. Further, in the bottom 23 of the nacelle 20, an opening 23c is formed along the outer circumferential surface of the tower upper end 11a. Around this opening 23, the depression 23a is provided. An edge part 23b of the depression 23a on an opening side is arranged along the outer circumference of the tower 11.

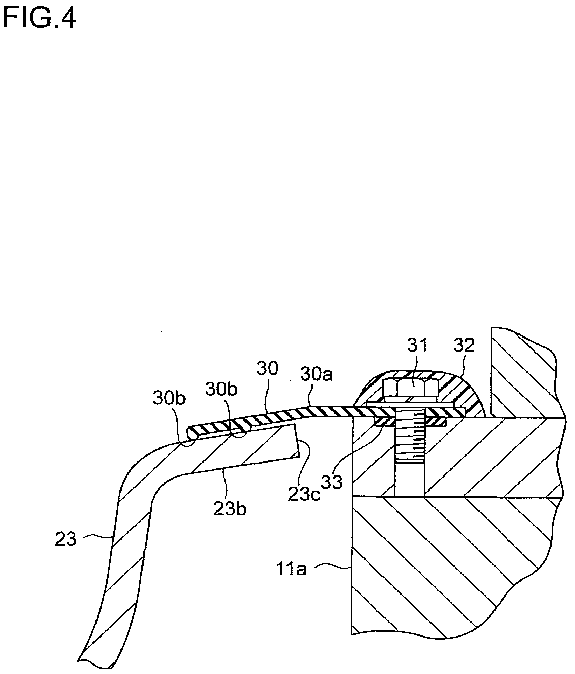

Further, as illustrated in FIG.3 and FIG.4, a first seal member 30 is provided. The first seal member 30 is attached to the brake disc 16 at a position lower than the yaw bearing 12. The first seal member 30 is configured to contact the edge part 23b of the bottom 23 of the nacelle 20 on the opening side. The first seal member 30 is formed by, for instance, an elastic member. The first seam member 30 is formed into an annular shape and is arranged in a bridge-like manner between the outer circumferential side of the brake disc 16 and the edge part 23b of the bottom 23 on the opening side. The first seal member 30 formed into an annular shape may be arranged so that its inner circumferential side contacts the top surface of the brake disk 16 on the outer circumferential side and its outer circumferential side contacts the edge part 23b of the bottom 23 on the opening side. As described above, the first seal member 30 is arranged to contact the edge pat 23b of the bottom 23 of the nacelle 20 on the opening side from above. This makes it possible to lead the leak oil generated in the nacelle 20 or in its periphery to the depression 23a of the bottom 23 of the nacelle 20. The first seal member 30 may be attached to the brake disc 16 provided between the outer ring 12b of the yaw bearing 12 and the top end surface of the tower 11. The first seal member 30 may be attached to the outer circumferential surface of the outer ring 12b in an area below the external teeth 13.

Moreover, in at least a part of an area where the edge part 23b on the opening side contacts the first seal member 30, the edge part 23b on the opening side has an inclined surface which is arranged to incline downward toward a radially outward direction of the tower 11. As described above, the edge part 23b on the opening side has the inclined surface arranged to incline downward in the radially outward direction of the tower 11 and thus, the leak oil generated in the nacelle 20 or in the periphery of the nacelle 20 is reliably led along the inclined surface to the depression 23a of the bottom 23 of the nacelle 20.

As illustrated in FIG.4 and FIG.5, the first seal member 30 may include: an annular main part 30a which contacts the edge part 23b of the bottom 23 of the nacelle 20 on the opening side; and at least one projection 30b which is provided on a surface of the main part 30a of the first seal member 30 opposing the edge part 23b of the bottom 23 of the nacelle 20 on the opening side. In this case, the projection 30b is provided with antiwear coating.

The first seal member 30 is attached to a bottom part of the yaw bearing 12 or to the brake disc 16, and the first seal member 30 slides relative to the edge part 23b of the bottom 23 of the nacelle 20 on the opening side when the nacelle 20 turns in the yaw direction. Thus, by providing the projection 30b in the seal member 30, the first seal member 30 comes in point contact or line contact with the edge part 23b of the bottom 23 of the nacelle 20 on the opening side. As a result, the leak oil is reliably prevented from leaking further. By providing the projection 23b with the antiwear coating, it is possible to form the structure that is not prone to wear even when the first seal member 30 and the edge part 23b of the bottom 23 of the nacelle 20 slide against each other.

Further, the first seal member 30 may be attached to the brake disc 16 with at least one bolt 31. For instance, the first seal member 30 is attached to the brake disc 16 with a plurality of the bolts 31 that are arranged with a prescribed distance from each other along the outer circumference of the brake disc 16.

In this case, a second seal member 32 may be provided to cover a head of the bolt 31.

As described above, the first seal member 30 is attached to the brake disc 16 with at least one bolt 31 and the head of the bolt 31 is covered by the second seal member 32. Therefore, it is possible to prevent the leak oil from leaking from the bolt hole to the outside of the wind turbine generator 1.

In the case where the first seal member 30 is attached to the brake disc 16 with at lest one bolt 31, a third seal member 33 may be provided for seal between the brake disk 16 and the first seal member 30 attached to the brake disk 16. The third seal member 33 is provided annularly over an entire circumference of the brake disc 16. The pressing force of the first seal member 30 deteriorates between two bolts 31, 31 that are next to each other. Thus, the third seal member 32 is provided for seal between the brake disc 16 and the first seal member 30 over the entire circumference of the brake disc 16. This prevents leaking of the leak oil more reliably.

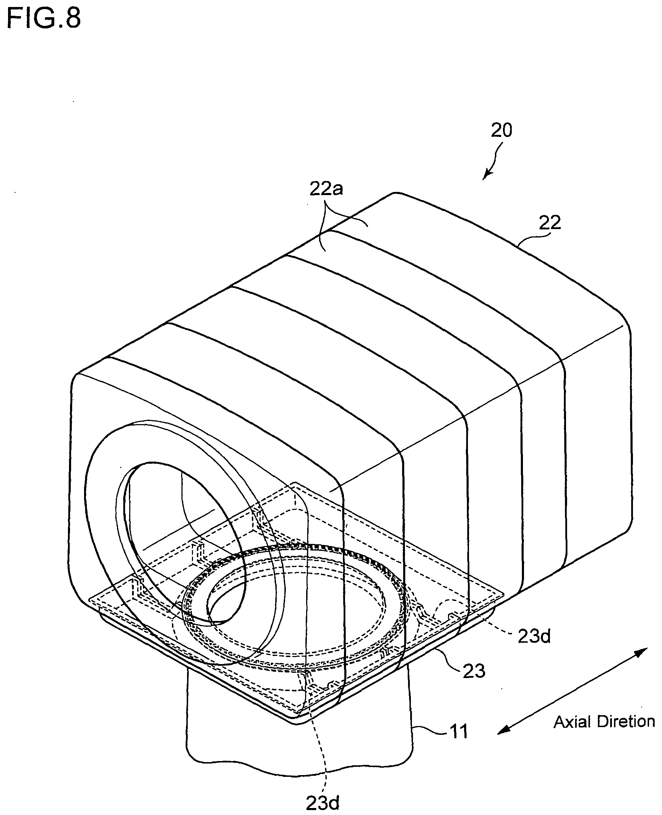

In some embodiments, as illustrated in FIG.8, the bottom 23 of the nacelle 20 includes at least one rib 23d provided in the depression 23a. FIG.8 is an oblique view of the nacelle according to one embodiment of the present invention. By forming the rib 23d in the depression 23a of the bottom 23 of the nacelle 20, the strength of the bottom 23 of the nacelle 20 is improved. Further, in the case of the large wind turbine generator 1, the nacelle cover body 22 is often formed by a plurality of parts. For instance, the nacelle cover body 22 is formed by a plurality of members 22a configured to be separable in the axial direction of the main shaft 5. These members 22a have flanges projecting in the inward direction of the nacelle cover body 22. By fastening the flanges of adjacent two of the members 22a with bolts, the nacelle cover body 22 is assembled. In this case, the rib 23d may be provided corresponding to this flange in the bottom 23 of the nacelle 20.

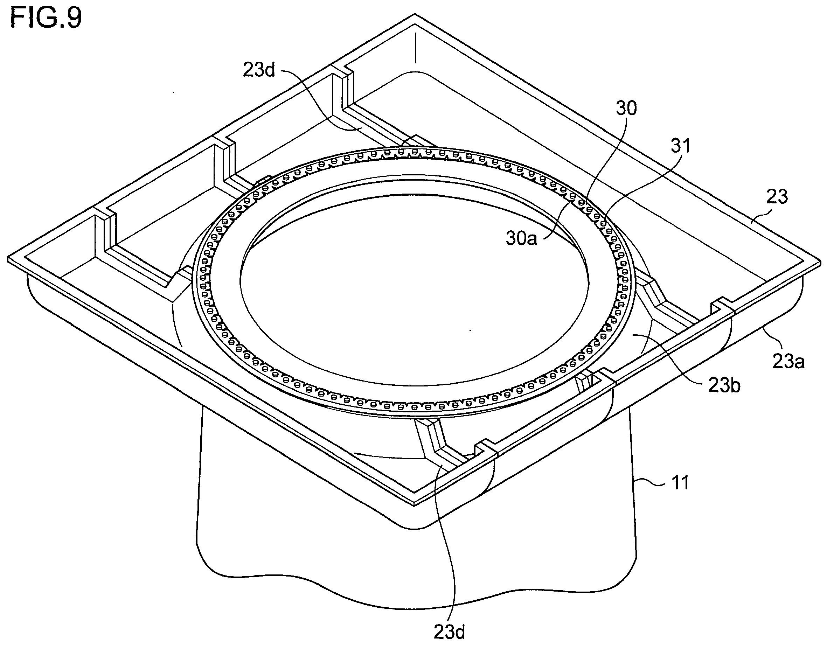

In some embodiments, as illustrated in FIG.9, the first seal member 30 is formed with a plurality of slits 30a on the inner circumferential side to absorb a difference in circumferential length between the inner circumferential side and an outer circumferential side. The first seal member 30 is formed into a taper shape inclining from the inner circumferential side toward the outer circumferential side. Further, FIG.9 is an oblique view of the bottom of the nacelle according to one embodiment of the present invention. In this case, an annular object may be made by deforming a rectangular elastic member having a plurality of slits 30a on one edge (one side of the rectangular elastic member) disposed along a longitudinal direction, such that both ends of the elastic member are abutted to each other and the one edge is arranged on an inner circumferential side of the annular object whereas an edge opposing the one edge is disposed on an outer circumferential side of the annular object, and this annular object may be used as the first seal member 30.

In one embodiment, the first seal member 30 is attached to an area of a top surface of the brake disk 16, which is not covered by the outer ring 12b, and an annular retaining plate is further provided for pressing the first seal member 30 attached to the area toward the brake disk 16 from above. As a result, it is possible to achieve weight reduction of the brake disc 16.

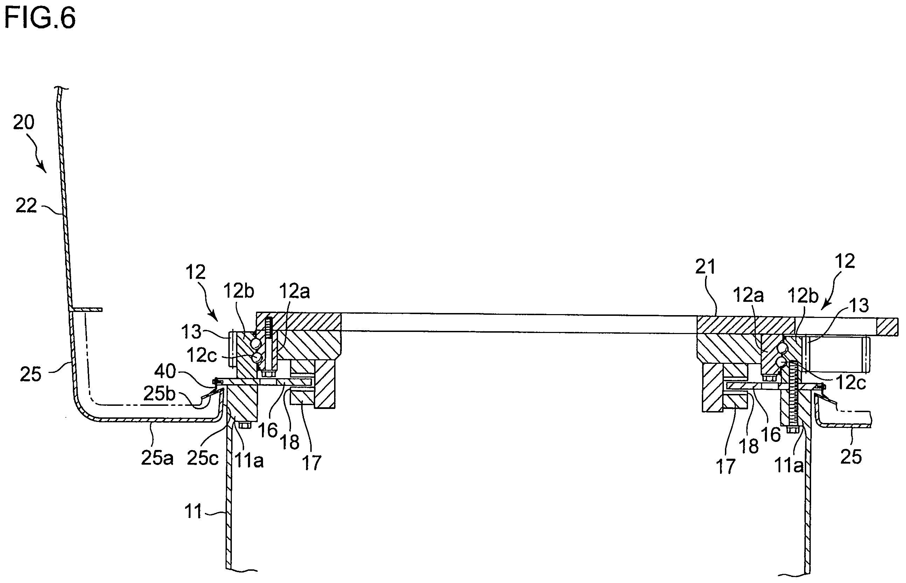

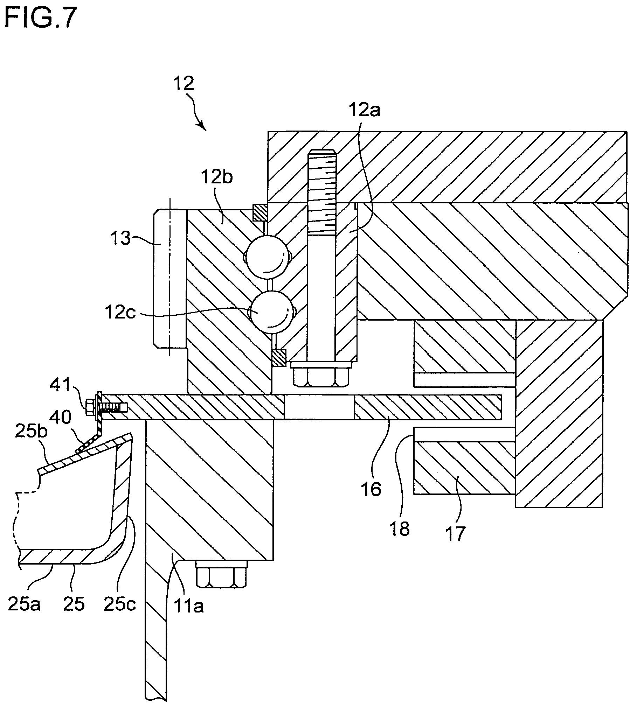

Herein, in reference to FIG.6 and FIG.7, the structure of the wind turbine generator 1 according to another embodiment is explained. FIG.6 is a cross-sectional view of the part of connection between the nacelle and the tower according to another embodiment of the present invention. FIG.7 is an enlarged cross-sectional view of the yaw bearing and its peripheral structure of FIG.6. In the wind turbine generator 1 illustrated in FIG.6 and FIG.7, components illustrated in FIG.2 to FIG.4 are denoted by the same reference numerals, and thus detailed description thereof will be hereinafter omitted.

As illustrated in FIG.6 and FIG.7, the wind turbine generator 1 is provided with the yaw turning mechanism for turning the nacelle 20. The yaw turning mechanism has the following structure.

The yaw bearing 12 is provided between the nacelle base plate 21 and the tower 11. The yaw bearing 12 includes the inner ring 12a fixed to the nacelle base plate 21, the outer ring 12b fixed to the tower upper end 11a, the ball bearing 12c placed between the inner ring 12a and the outer ring 12b. On the outer circumferential side of the outer ring 12b, the external teeth 13 are provided. The external teeth 13 are arranged to mesh with a pinion gear (not shown) of the yaw turning mechanism. Further, the yaw turning mechanism is configured to turn the nacelle 20 relative to the tower 11.

Further, the wind turbine generator 1 includes the braking mechanism for applying a brake force to the nacelle 20 which is configured to turn. The braking mechanism has the following structure.

The brake disc 16 is fixed to the tower upper end 11a. The brake disc 16 projects outward from the outer circumferential surface of the upper end 11a of the tower 11. The brake caliper 17 and the brake pad 18 are fixed to the nacelle base plate 21. The brake pad 18 is pressed to top and bottom surfaces of the brake disc 16 using the brake caliper 17 so as to apply the brake force to the nacelle 20.

The nacelle 20 has the nacelle base plate 21, the nacelle cover body 22 and a bottom 25.

In the bottom 25 of the nacelle 20, an opening 25c is formed along the outer circumferential surface of the upper end 11a of the tower 11. Around this opening 25c, a depression 25a is provided. An edge part of the depression 25a on the opening side is arranged along the outer circumference of the tower 11.

The wind turbine generator 1 is further provided with a first seal member 40 which is attached to the brake disc 16 and which is configured to contact the edge part 25b of the bottom 25 of the nacelle 20 on the opening side. The first seal member 40 is formed into an annular shape.

In this embodiment, the brake disk 16 is provided to project outward from the outer circumferential surface of the upper end 11a of the tower 11. Thus, the first seal member 40 is fixed to the outer circumferential surface of the brake disc 16 with bolts 41. The outer circumferential side of the first seal member 40 contacts the edge part 25b of the bottom 25 of the nacelle 20 on the opening side. As a result, the first seal member 40 rotates slidingly in contact with the edge part 25b on the opening side when the nacelle 20 turns with respect to the tower 11 and leaking of the leak oil from a gap between the nacelle 20 and the tower 11 is prevented.

In reference to FIG.1 and FIG.3, an installation method of the wind turbine generator 1 according to one embodiment is described below.

First, a nacelle unit including the yaw bearing 12, the brake disc 16 and the first seal member 30 is formed. The nacelle unit may be formed in a place remote from the installation site of the wind turbine generator 1, such as a nacelle assembly plant.

Next, the tower 11 is installed at the installation site of the wind turbine generator 1. The tower 11 may be formed by connecting a plurality of tower sections having a plurality of cylindrical shells welded together. In this case, the tower sections are transferred to the installation site of the wind turbine generator 1, and the tower sections are stacked up by fastening flanges of the tower sections that are next to each other in the vertical direction with bolts.

When the tower 11 is installed, the nacelle unit transferred to the installation site of the wind turbine generator 1 is installed to the upper end 11a of the tower 11.

In the installation method of the wind turbine generator 1, as described above, the rectangular elastic member having a plurality of slits 30a on one edge along the longitudinal direction is deformed to make the annular object such that both ends of the elastic member are abutted to each other, and said one edge is arranged on an inner circumferential side of the annular object whereas an edge opposing said one edge is arranged on an outer circumferential side of the annular object, and this annular object may be used as the first seal member 30.

As described above, according to the above embodiment, the bottom 23, 25 of the nacelle 20 is arranged along the upper end of the tower 11 and the depression 23a, 25a is provided in the bottom 23, 25 of the nacelle 20. Thus, the leak oil leaking from the devices in the nacelle 20 can be collected in the depression 23a, 25a and this prevents the leak oil from leaking to the outside the wind turbine generator 1. Further, by providing the first seal member 30, 40 which is attached to the bottom part of the yaw bearing 12 or to the brake disc 16 and which is configured to contact the edge part 23b, 25b of the bottom 23, 25 of the nacelle 20 on the opening side. As a result, even when the nacelle 20 turns with respect to the tower 11, by using the first seal member 30, 40, it is possible to prevent leaking of the leak oil from between the nacelle 20 and the tower 11.

As the first seal member 30, 40 is attached to the brake disc 16 or the bottom part of the yaw bearing 12, installation of the first seal member 30, 40 can be completed at a plant where the nacelle 20 is manufactured.

While the embodiments of the present invention have been described, it is obvious to those skilled in the art that various changes and modifications may be made without departing from the scope of the invention.

### [Reference Signs list]

- 1: Wind turbine generator
- 2: Blade
- 3: Hub
- 3a: Hub cover
- 4: Rotor
- 5: Main shaft
- 6: Drive train
- 7: Hydraulic pump
- 8: Hydraulic motor
- 9a: High pressure oil line
- 9b: Low pressure oil line
- 10: Generator
- 11: Tower
- 11a: Tower upper end
- 12: Yaw bearing
- 12a: Inner ring
- 12b: Outer ring
- 12c: Ball bearing
- 13: External teeth
- 15: Yaw turning mechanism
- 15a: Drive unit
- 15b: Pinion gear
- 16: Brake disc
- 17: Brake caliper
- 18: Brake pad
- 20: Nacelle
- 21: Nacelle base plate
- 22: Nacelle cover body
- 23, 25: Bottom
- 23a, 25a: Depression
- 23b, 25b: Edge part on the opening side
- 23c, 25c: Opening
- 30, 40: First seal member
- 30a: Main part
- 30b: Projection
- 31, 41: Bolt
- 32: Second seal member
- 33: Third seal member

## Claims

1. A wind turbine generator (1) which comprises:
a tower;
a nacelle (20);
a yaw bearing (12) for supporting the nacelle (20) rotatably to the tower;
a brake disc (16) provided between a bottom end surface of the yaw bearing (12) and a top end surface of the tower;
the nacelle (20) comprising a bottom (23, 25) formed with an opening (23c 25c) along an outer circumferential surface of an upper end of the tower and **characterized in that** the bottom of the nacelle is formed with a depression (23a, 25a) around the opening (23c, 25c);
and **in that** the wind turbine generator (1) further comprises a first seal member (30, 40) attached to a bottom part of the yaw bearing (12) or to the brake disc (16), the first seal member (30, 40) being configured to contact an edge part (23b 25b) of the bottom of the nacelle (20) on an opening side.

2. The wind turbine generator (1) according to claim 1,
wherein the bottom of the nacelle (20) is configured so that the edge part (23b 25b) of the bottom (23, 25) of the nacelle (20) is disposed above a side face on the opening side which forms the depression (23a, 25a), and
wherein the first seal member (30, 40) is arranged to contact the edge part on the opening side from above.

3. The wind turbine generator (1) according to claim 1 or 2,
wherein in at least a part of an area where the edge part (23b 25b) on the opening side contacts the first seal member (30, 40), the edge part (23b 25b) on the opening side has an inclined surface arranged to incline downward toward a radially outward direction of the tower.

4. The wind turbine generator (1) according to any one of claims 1 to 3,
wherein the first seal member (30, 40) includes at least one projection (30b) which is provided on a surface of the first seal member (30, 40) that faces the edge part (23b 25b) on the opening side, the at least one projection (30b) being provided with antiwear coating.

5. The wind turbine generator (1) according to any one of claims 1 to 4,
wherein the bottom (23, 25) of the nacelle (20) includes at least one rib provided in the depression (23a, 25a).

6. The wind turbine generator (1) according to any one of claims 1 to 5, further comprising:
at least one bolt (31, 41) for mounting the first seal member (30, 40) to the bottom part of the yaw bearing (12) or the brake disc (16); and
at least one second seal member (32) which covers a head of the at least one bolt (31, 41).

7. The wind turbine generator (1) according to claim 6, further comprising:
a third seal member (33) for seal between the brake disk (16) and the first seal member (30, 40) attached to the brake disk (16),
wherein the third seal member (33) is provided over an entire circumference of the brake disk (16).

8. The wind turbine generator (1) according to any one of claims 1 to 7,
wherein the first seal member (30, 40) is formed with a plurality of slits on an inner circumferential side to absorb a difference in circumferential length between the inner circumferential side and an outer circumferential side, the first seal member (30, 40) being formed into a taper shape inclining from the inner circumferential side toward the outer circumferential side.

9. The wind turbine generator (1) according to any one of claims 1 to 8,
wherein the first seal member (30, 40) is attached to the brake disc (16) provided between an outer ring of the yaw bearing (12) and the top end surface of the tower.

10. The wind turbine generator (1) according to claim 9,
wherein the first seal member (30, 40) is attached to an area of a top surface of the brake disk (16) which is not covered by the outer ring, and
wherein the wind turbine generator (1) further comprises an annular retaining plate for pressing the first seal member (30, 40) attached to the area toward the brake disk (16) from above.

11. The wind turbine generator (1) according to any one of claims 1 to 8, further comprising:
a yaw drive system (15) comprising a pinion gear (15b) meshing with external teeth (13) provided on an outer ring (12b) of the yaw bearing (12), and a drive unit (15a) for driving the pinion gear (15b),
wherein the first seal member (30, 40) is attached to an outer circumferential surface of the outer ring (12b) in an area of the outer circumferential surface located lower than the external teeth (13).

12. The wind turbine generator (1) according to any one of claims 1 to 11,
wherein the nacelle (20) comprises a nacelle base plate (21) attached to the yaw bearing (12), a nacelle frame attached to the nacelle base plate, and a nacelle cover attached to the nacelle frame, and
wherein the nacelle cover comprises a nacelle cover body (22) for forming an interior space of the nacelle (20) and the bottom attached to a bottom surface of the nacelle cover body (22).

13. The wind turbine generator (1) according to any one of claims 1 to 12,
wherein the first seal member (30, 40) comprises an elastic member provided to cover the edge part (23b, 25b)on the opening side.

14. An installation method of a wind turbine generator (1) which comprises: a tower; a nacelle (20) having a bottom (23, 25) formed with an opening (23c, 25c) along an outer circumferential surface of an upper end of the tower and with a depression (23a, 25a) around the opening (23c, 25c); a yaw bearing (12) for supporting the nacelle (20) rotatably to the tower; a brake disc (16) provided between a bottom end surface of the yaw bearing (12) and a top end surface of the tower; and a first seal member (30, 40) attached to a bottom part of the yaw bearing (12) or to the brake disc (16), the first seal member (30, 40) being configured to contact an edge part (23b, 25b) of the bottom of the nacelle (20) on an opening side, the installation method comprising:
a nacelle unit formation step of forming a nacelle unit including the nacelle (20), the yaw bearing (12), the brake disk (16) and the first seal member (30, 40);
a tower installation step of installing the tower; and
a nacelle unit installation step of installing the nacelle unit on the tower after the tower installation step.

15. The installation method according to claim 14,
wherein the nacelle unit formation step comprises the substeps of:
making an annular object by deforming a rectangular elastic member having a plurality of slits on one edge along a longitudinal direction such that both ends of the elastic member are abutted to each other, and said one edge is arranged on an inner circumferential side of the annular object whereas an edge opposing said one edge is arranged on an outer circumferential side of the annular object; and
attaching the annular object to a top surface of the brake disc (16) to form the seal member (30, 40).

## Patentansprüche

1. Windkraftanlage (1), welche umfasst:
einen Turm,
eine Gondel (20),
ein Azimutlager (12) zum drehbaren Lagern der Gondel (20) an dem Turm,
eine Bremsscheibe (16), die zwischen einer unteren Endoberfläche des Azimutlagers (12) und einer oberen Endoberfläche des Turms vorgesehen ist,
wobei die Gondel (20) einen Boden (23, 25) umfasst, der mit einer Öffnung (23c, 25c) entlang einer Außenumfangsoberfläche eines oberen Endes des Turms ausgebildet ist, und
**dadurch gekennzeichnet, dass** der Boden der Gondel mit einer Vertiefung (23a, 25a) um die Öffnung (23c, 25c) herum ausgebildet ist,
und dass die Windkraftanlage (1) ferner ein erstes Dichtungselement (30, 40) umfasst, welches an einem unteren Teil des Azimutlagers (12) oder an der Bremsscheibe (16) befestigt ist, wobei das erste Dichtungselement (30, 40) dazu ausgebildet ist, einen Kantenteil (23b, 25b) des Bodens der Gondel (20) auf einer Öffnungsseite zu berühren.

2. Windkraftanlage (1) nach Anspruch 1,
wobei der Boden der Gondel (20) derart ausgebildet ist, dass der Kantenteil (23b, 25b) des Bodens (23, 25) der Gondel (20) oberhalb einer Seitenfläche auf der Öffnungsseite, welche die Vertiefung (23a, 25a) bildet, angeordnet ist, und
wobei das erste Dichtungselement (30, 40) angeordnet ist, um den Kantenteil auf der Öffnungsseite von oben zu berühren.

3. Windkraftanlage (1) nach Anspruch 1 oder 2,
wobei in mindestens einem Teil eines Bereichs, wo der Kantenteil (23b, 25b) auf der Öffnungsseite das erste Dichtungselement (30, 40) berührt, der Kantenteil (23b, 25b) auf der Öffnungsseite eine geneigte Oberfläche aufweist, die derart angeordnet ist, dass sie in Richtung einer radial nach außen verlaufenden Richtung des Turms abwärts geneigt ist.

4. Windkraftanlage (1) nach einem beliebigen der Ansprüche 1 bis 3,
wobei das erste Dichtungselement (30, 40) mindestens einen Vorsprung (30b) umfasst, der an einer Oberfläche des ersten Dichtungselements (30, 40) vorgesehen ist, welche dem Kantenteil (23b, 25b) auf der Öffnungsseite zugewandt ist, wobei der mindestens eine Vorsprung (30b) mit einer Verschleißschutzbeschichtung versehen ist.

5. Windkraftanlage (1) nach einem beliebigen der Ansprüche 1 bis 4,
wobei der Boden (23, 25) der Gondel (20) mindestens eine Rippe umfasst, die in der Vertiefung (23a, 25a) vorgesehen ist.

6. Windkraftanlage (1) nach einem beliebigen der Ansprüche 1 bis 5, ferner umfassend:
mindestens eine Schraube (31, 41) zum Anbringen des ersten Dichtungselements (30, 40) an dem unteren Teil des Azimutlagers (12) oder an der Bremsscheibe (16), und
mindestens ein zweites Dichtungselement (32), welches einen Kopf der mindestens einen Schraube (31, 41) abdeckt.

7. Windkraftanlage (1) nach Anspruch 6, ferner umfassend:
ein drittes Dichtungselement (33) zum Abdichten zwischen der Bremsscheibe (16) und dem ersten Dichtungselement (30, 40), welches an der Bremsscheibe (16) befestigt ist,
wobei das dritte Dichtungselement (33) über einen gesamten Umfang der Bremsscheibe (16) vorgesehen ist.

8. Windkraftanlage (1) nach einem beliebigen der Ansprüche 1 bis 7,
wobei das erste Dichtungselement (30, 40) auf einer Innenumfangsseite mit mehreren Schlitzen ausgebildet ist, um eine Differenz der Umfangslänge zwischen der Innenumfangsseite und einer Außenumfangsseite auszugleichen, wobei das erste Dichtungselement (30, 40) mit einer verjüngten Form ausgebildet ist, die von der Innenumfangsseite in Richtung der Außenumfangsseite geneigt ist.

9. Windkraftanlage (1) nach einem beliebigen der Ansprüche 1 bis 8,
wobei das erste Dichtungselement (30, 40) an der Bremsscheibe (16) befestigt ist, die zwischen einem Außenring des Azimutlagers (12) und der oberen Endoberfläche des Turms vorgesehen ist.

10. Windkraftanlage (1) nach Anspruch 9,
wobei das erste Dichtungselement (30, 40) an einem Bereich einer oberen Oberfläche der Bremsscheibe (16) befestigt ist, welcher nicht durch den Außenring abgedeckt ist, und
wobei die Windkraftanlage (1) ferner eine ringförmige Halteplatte zum Drücken des ersten Dichtungselements (30, 40), das an dem Bereich befestigt ist, von oben in Richtung der Bremsscheibe (16) umfasst.

11. Windkraftanlage (1) nach einem beliebigen der Ansprüche 1 bis 8, ferner umfassend:
ein Azimutantriebssystem (15), umfassend ein Ritzel (15b), das mit Außenzähnen (13), die an einem Außenring (12b) des Azimutlagers (12) vorgesehen sind, in Eingriff steht, und eine Antriebseinheit (15a) zum Antreiben des Ritzels (15b),
wobei das erste Dichtungselement (30, 40) an einer Außenumfangsoberfläche des Außenrings (12b) in einem Bereich der Außenumfangsoberfläche, der tiefer als die Außenzähne (13) angeordnet ist, befestigt ist.

12. Windkraftanlage (1) nach einem beliebigen der Ansprüche 1 bis 11,
wobei die Gondel (20) eine Gondelbasisplatte (21), die an dem Azimutlager (12) befestigt ist, einen Gondelrahmen, der an der Gondelbasisplatte befestigt ist, und ein Gondelabdeckung, die an dem Gondelrahmen befestigt ist, umfasst, und
wobei die Gondelabdeckung einen Gondelabdeckungskörper (22) zum Ausbilden eines Innenraums der Gondel (20) und den Boden, der an einer unteren Oberfläche des Gondelabdeckungskörpers (22) befestigt ist, umfasst.

13. Windkraftanlage (1) nach einem beliebigen der Ansprüche 1 bis 12,
wobei das erste Dichtungselement (30, 40) ein elastisches Element umfasst, das vorgesehen ist, um den Kantenteil (23b, 25b) auf der Öffnungsseite abzudecken.

14. Verfahren zur Montage einer Windkraftanlage (1), welche umfasst: einen Turm, eine Gondel (20) mit einem Boden (23, 25), der mit einer Öffnung (23c, 25c) entlang einer Außenumfangsoberfläche eines oberen Endes des Turms und mit einer Vertiefung (23a, 25a) um die Öffnung (23c, 25c) herum ausgebildet ist, ein Azimutlager (12) zum drehbaren Lagern der Gondel (20) an dem Turm, eine Bremsscheibe (16), die zwischen einer unteren Endoberfläche des Azimutlagers (12) und einer oberen Endoberfläche des Turms vorgesehen ist, und ein erstes Dichtungselement (30, 40), das an einem unteren Teil des Azimutlagers (12) oder an der Bremsscheibe (16) befestigt ist, wobei das erste Dichtungselement (30, 40) dazu ausgebildet ist, einen Kantenteil (23b, 25b) des Bodens der Gondel (20) auf einer Öffnungsseite zu berühren, wobei das Montageverfahren umfasst:
einen Gondeleinheitsausbildungsschritt zum Ausbilden einer Gondeleinheit, welche die Gondel (20), das Azimutlager (12), die Bremsscheibe (16) und das erste Dichtungselement (30, 40) umfasst,
einen Turmmontageschritt zum Montieren des Turms, und
einen Gondeleinheitsmontageschritt zum Montieren der Gondeleinheit an dem Turm nach dem Turmmontageschritt.

15. Montageverfahren nach Anspruch 14,
wobei der Gondeleinheitsausbildungsschritt folgende Unterschritte umfasst:
Herstellen eines ringförmigen Gegenstands durch Verformen eines rechteckigen elastischen Elements, das entlang einer Längsrichtung mehrere Schlitze an einer Kante aufweist, derart, dass beide Enden des elastischen Elements aneinander anliegen und die eine Kante auf einer Innenumfangsseite des ringförmigen Gegenstands angeordnet ist, während eine der Kante entgegengesetzte Kante auf einer Außenumfangsseite des ringförmigen Gegenstands angeordnet ist, und
Befestigen des ringförmigen Gegenstands an einer oberen Oberfläche der Bremsscheibe (16), um das Dichtungselement (30, 40) zu bilden.

## Revendications

1. Générateur d'éolienne (1) qui comprend :
une tour ;
une nacelle (20) ;
un palier de lacet (12) pour supporter la nacelle (20) en rotation sur la tour ;
un disque de frein (16) prévu entre une surface d'extrémité inférieure du palier de lacet (12) et une surface supérieure d'extrémité de la tour ;
la nacelle (20) comprenant un fond (23, 25) formé avec une ouverture (23c, 25c) le long d'une surface circonférentielle externe d'une extrémité supérieure de la tour et **caractérisé en ce que** le fond de la nacelle est formé avec une dépression (23a, 25a) autour de l'ouverture (23c, 25c) ;
et **en ce que** le générateur d'éolienne (1) comprend en outre un premier élément d'étanchéité (30, 40) fixé sur une partie inférieure du palier de lacet (12) ou sur le disque de frein (16), le premier élément d'étanchéité (30, 40) étant configuré pour entrer en contact avec une partie de bord (23b, 25b) du fond de la nacelle (20) d'un côté d'ouverture.

2. Générateur d'éolienne (1) selon la revendication 1,
dans lequel le fond de la nacelle (20) est configuré de sorte que la partie de bord (23b, 25b) du fond (23, 25) de la nacelle (20) est disposée au-dessus d'une face latérale du côté de l'ouverture qui forme la dépression (23a, 25a), et
dans lequel le premier élément d'étanchéité (30, 40) est agencé pour entrer en contact avec la partie de bord du côté de l'ouverture, depuis le dessus.

3. Générateur d'éolienne (1) selon la revendication 1 ou 2,
dans lequel dans au moins une partie d'une zone où la partie de bord (23b, 25b) du côté de l'ouverture est en contact avec le premier élément d'étanchéité (30, 40), la partie de bord (23b, 23b) du côté de l'ouverture a une surface inclinée agencée pour s'incliner vers le bas vers une direction radialement externe de la tour.

4. Générateur d'éolienne (1) selon l'une quelconque des revendications 1 à 3,
dans lequel le premier élément d'étanchéité (30, 40) comprend au moins une saillie (30b) qui est prévue sur une surface du premier élément d'étanchéité (30, 40) qui fait face à la partie de bord (23b, 25b) du côté de l'ouverture, la au moins une saillie (30b) étant prévue avec un revêtement anti-usure.

5. Générateur d'éolienne (1) selon l'une quelconque des revendications 1 à 4,
dans lequel le fond (23, 25) de la nacelle (20) comprend au moins une nervure prévue dans la dépression (23a, 25a).

6. Générateur d'éolienne (1) selon l'une quelconque des revendications 1 à 5, comprenant en outre :
au moins un boulon (31, 41) pour monter le premier élément d'étanchéité (30, 40) sur la partie inférieure du palier de lacet (12) ou le disque de frein (16) ; et
au moins un deuxième élément d'étanchéité (32) qui recouvre une tête du au moins un boulon (31, 41).

7. Générateur d'éolienne (1) selon la revendication 6, comprenant en outre :
un troisième élément d'étanchéité (33) pour réaliser l'étanchéité entre le disque de frein (16) et le premier élément d'étanchéité (30, 40) fixé sur le disque de frein (16),
dans lequel le troisième élément d'étanchéité (33) est prévu sur toute une circonférence du disque de frein (16).

8. Générateur d'éolienne (1) selon l'une quelconque des revendications 1 à 7,
dans lequel le premier élément d'étanchéité (30, 40) est formé avec une pluralité de fentes sur un côté circonférentiel interne afin d'absorber une différence de longueur circonférentielle entre le côté circonférentiel interne et un côté circonférentiel externe, le premier élément d'étanchéité (30, 40) étant formé selon une forme de conicité s'inclinant du côté circonférentiel interne vers le côté circonférentiel externe.

9. Générateur d'éolienne (1) selon l'une quelconque des revendications 1 à 8,
dans lequel le premier élément d'étanchéité (30, 40) est fixé sur le disque de frein (16) prévu entre un anneau externe du palier de lacet (12) et la surface d'extrémité supérieure de la tour.

10. Générateur d'éolienne (1) selon la revendication 9,
dans lequel le premier élément d'étanchéité (30, 40) est fixé sur une zone d'une surface supérieure du disque de frein (16) qui n'est pas recouverte par l'anneau externe, et
dans lequel le générateur d'éolienne (1) comprend en outre une plaque de retenue annulaire pour comprimer le premier élément d'étanchéité (30, 40) fixé à la zone vers le disque de frein (16) depuis le dessus.

11. Générateur d'éolienne (1) selon l'une quelconque des revendications 1 à 8, comprenant en outre :
un système d'entraînement de lacet (15) comprenant un engrenage à pignons (15b) s'engrenant avec des dents externes (13) prévues sur un anneau externe (12b) du palier de lacet (12), et une unité d'entraînement (15a) pour entraîner l'engrenage à pignons (15b),
dans lequel le premier élément d'étanchéité (30, 40) est fixé sur une surface circonférentielle externe de l'anneau externe (12b) dans une zone de la surface circonférentielle externe positionnée plus bas que les dents externes (13).

12. Générateur d'éolienne (1) selon l'une quelconque des revendications 1 à 11,
dans lequel la nacelle (20) comprend une plaque de base de nacelle (21) fixée au palier de lacet (12), un châssis de nacelle fixé sur la plaque de base de nacelle, et un couvercle de nacelle fixé sur le châssis de nacelle, et
dans lequel le couvercle de nacelle comprend un corps de couvercle de nacelle (22) pour former un espace intérieur de la nacelle (20) et le fond fixé à une surface inférieure du corps de couvercle de nacelle (22).

13. Générateur d'éolienne (1) selon l'une quelconque des revendications 1 à 12,
dans lequel le premier élément d'étanchéité (30, 40) comprend un élément élastique prévu pour recouvrir la partie de bord (23b, 25b) du côté de l'ouverture.

14. Procédé d'installation d'un générateur d'éolienne (1) qui comprend : une tour ; une nacelle (20) ayant un fond (23, 25) formé avec une ouverture (23c, 25c) le long d'une surface circonférentielle externe d'une extrémité supérieure de la tour et avec une dépression (23a, 25a) autour de l'ouverture (23c, 25c) ; un palier de lacet (12) pour supporter la nacelle (20) en rotation sur la tour ; un disque de frein (16) prévu entre une surface d'extrémité inférieure du palier de lacet (12) et une surface d'extrémité supérieure de la tour ; et un premier élément d'étanchéité (30, 40) fixé sur une partie inférieure du palier de lacet (12) ou sur un disque de frein (16), le premier élément d'étanchéité (30, 40) étant configuré pour être en contact avec une partie de bord (23b, 25b) du fond de la nacelle (20) d'un côté d'ouverture, le procédé d'installation comprenant :
une étape de formation d'unité de nacelle consistant à former une unité de nacelle comprenant la nacelle (20), le palier de lacet (12), le disque de frein (16) et le premier élément d'étanchéité (30, 40) ;
une étape d'installation de tour consistant à installer la tour ; et
une étape d'installation d'unité de nacelle consistant à installer l'unité de nacelle sur la tour après l'étape d'installation de la tour.

15. Procédé d'installation selon la revendication 14,
dans lequel l'étape de formation d'unité de nacelle comprend les étapes auxiliaires consistant à :
réaliser un objet annulaire en déformant un élément élastique rectangulaire ayant une pluralité de fentes sur un bord le long d'une direction longitudinale de sorte que les deux extrémités de l'élément élastique viennent en butée entre elles et ledit un bord est agencé sur un côté circonférentiel interne de l'objet annulaire alors qu'un bord opposé audit un bord est agencé sur un côté circonférentiel externe de l'objet annulaire ; et
fixer l'objet annulaire sur une surface supérieure du disque de frein (16) afin de former l'élément d'étanchéité (30, 40).
